# FASCICULE DE BREVET EUROPEEN

(11) **EP 3 434 532 B1**
(45) Date de publication et mention de la délivrance du brevet: **04.08.2021**
(21) Numéro de dépôt: 18178362.2
(22) Date de dépôt: 18.06.2018
(51) Int. Cl.: B60R 19/12, B60R 19/18

(54) **SYSTÈME DE RETENUE D'APPUIS DE PARE-CHOCS AVANT**
HALTESYSTEM FÜR FRONT-STOSSFÄNGERSTÜTZEN
RESTRAINT SYSTEM FOR FRONT BUMPER SUPPORTS

(30) Priorité: 28.07.2017 FR 1757204
(43) Date de publication de la demande: 30.01.2019
(73) Titulaire: PSA Automobiles SA, 78300 Poissy (FR)
(72) Inventeur: GOUHINEC, Jean Paul, 78000 VERSAILLES (FR); BOUDAN, Julien, 91210 DRAVEIL (FR)

(56) Documents cités:
- EP-A1- 1 859 983
- EP-A2- 1 211 164
- DE-A1-102015 217 465
- FR-A1- 2 919 567
- FR-A1- 2 967 741

## Description

L'invention a trait au domaine de la carrosserie des véhicules automobiles. Plus particulièrement, l'invention concerne les pare-chocs avant impactés par un choc frontal de type urbain.

Le pare-chocs avant d'un véhicule automobile s'étend généralement devant au moins une traverse, plus particulièrement la traverse de pare-chocs, qui est destinée à absorber tout ou en partie de l'énergie résultant des chocs frontaux. Ce pare-chocs avant est également recouvert par une peau de pare-chocs dont la fonction est à la fois de masquer la face avant du véhicule et la traverse de pare-chocs, mais aussi de guider l'air à l'avant du véhicule automobile

Afin de consolider le pare-chocs avant d'un véhicule automobile, il est connu de mettre en place des équerres sur lesquelles des appuis ou supports de pare-chocs sont disposées en appui vertical. Toutefois, lors d'un choc frontal de type urbain à 15 km/h avec 40% de recouvrement contre un butoir rigide incliné à 10°, ces appuis de pare-chocs peuvent glisser en arrière vers le groupe moto-ventilateur du système de refroidissement du moteur et l'endommager, en s'appuyant notamment dessus sous l'effort de l'obstacle. Ceci a pour conséquence bien sûr de générer des coûts de réparations qui peuvent s'avérer relativement importants.

D'autres systèmes d'appui de pare-chocs ont bien sûr été développés, tel est le cas par exemple du document brevet publié DE 102 015 217 465 A1 qui divulgue un dispositif comprenant des supports de traverse de pare-chocs sur lesquels un élément de guidage peut être en plus mis en place. Ces supports sont généralement en matière plastique et sont formés d'un corps de base et de deux extrémités qui entourent par l'arrière la traverse de pare-chocs. L'élément de guidage quant-à-lui prolonge le corps de base de préférence dans la direction verticale et/ou longitudinale du véhicule, et est réalisé sous la forme d'un bras en porte-à-faux sur lequel peut être posé la peau de pare-chocs. Bien qu'avec ce dispositif, lors d'un choc à frontal à faible vitesse, le découplage de l'élément de guidage sur la traverse de pare-chocs se produise avant la déformation de celle-ci, permettant de limiter les dommages de l'impact, il n'en reste pas moins que les supports en plastique sont seulement fixés par emboîtement sur la traverse de pare-chocs et peuvent donc se désolidariser et venir endommager le système de refroidissement du véhicule.

Le document FR2919567 divulgue une face avant de véhicule automobile, avec des moyens de cohésion permettant de lier des éléments de supports, dont des supports de boitiers de projecteurs, à des longerons supérieurs droit et gauche dans le but de créer une structure rigide apte en cas de choc à grande vitesse à l'avant du véhicule à transmettre les efforts résultant du choc aux longerons supérieurs en maintenant lesdits longerons supérieurs sensiblement en position l'un par rapport à l'autre.

Le document FR2967741 divulgue une façade avant de véhicule correspondant au préambule de la revendication 1, avec un cadre structurel comportant une traverse supérieure de façade avant et une traverse inférieure de façade avant reliant deux dispositifs absorbeurs d'énergie verticaux l'un à l'autre. Un bouclier avant comportant une traverse supérieure de pare-chocs et une traverse inférieure de pare-chocs est disposé en avant de cette façade avant avec la traverse supérieure de pare-chocs disposée au droit des extrémités supérieures des dispositifs absorbeurs d'énergie et avec la traverse inférieure de pare-chocs disposée au droit des extrémités inférieures des dispositifs absorbeurs d'énergie.

L'invention a en fait pour objectif de pallier au moins un des inconvénients de l'état de la technique susmentionné. Plus particulièrement, l'invention a pour objectif d'améliorer les dispositifs d'appuis de pare-chocs afin d'éviter qu'ils n'entrent en contact avec le système de refroidissement lors de chocs frontaux à faible vitesse, de type urbain.

A cet effet, l'invention a pour objet une partie avant d'un véhicule automobile, avec les caractéristiques de la revendication 1.

Selon un mode avantageux de l'invention, chacune des platines supports du pare-chocs est disposée latéralement par rapport à un axe longitudinal du véhicule, à une extrémité de la traverse supérieure de façade avant.

Selon un mode avantageux de l'invention, chacune des platines supports du pare-chocs est fixée à l'extrémité correspondante de la traverse supérieure de façade avant et à un projecteur adjacent à ladite extrémité.

Selon un mode avantageux de l'invention, la ou chacune des platines supports du pare-chocs s'étend verticalement vers la traverse de pare-chocs.

Selon un mode avantageux de l'invention, la ou chacune des platines supports du pare-chocs coopère avec la traverse de pare-chocs *via* une équerre fixée à ladite traverse. L'équerre ou chacune des équerres est avantageusement formée par un ruban métallique plié.

Selon un mode avantageux de l'invention, la ou chacune des équerres comprend une troisième portion s'étendant verticalement vers le haut depuis la deuxième portion et derrière la platine support du pare-chocs correspondante.

Selon un mode avantageux de l'invention, la première portion de la ou de chacune des équerres est vissée directement sur la traverse de pare-chocs ou sur une patte soudée à la dite traverse.

Selon un mode avantageux de l'invention, la première portion de la ou de chacune des équerres est vissée directement sur la traverse de pare-chocs ou sur une patte soudée à la dite traverse.

Selon un mode avantageux de l'invention, la patte inférieure de la ou de chacune des platines supports du pare-chocs est formée pour épouser la tête de la ou d'au moins une des vis de fixation de l'équerre correspondante sur la traverse de pare-chocs. Avantageusement, la ou chacune des platines supports du pare-chocs est réalisée d'un seul tenant, préférentiellement en matière plastique. Avantageusement, la ou chacune des platines supports du pare-chocs présente une forme généralement étendue avec des reliefs. La ou chacune des platines supports du pare-chocs s'étend avantageusement suivant une direction principale généralement verticale.

Les mesures de l'invention sont intéressantes en ce qu'elles permettent, lors de chocs urbains, d'empêcher le recul des platines supports de pare-chocs, aussi appelées appuis de pare-chocs, et ainsi de réduire les dommages, mais aussi par conséquent de limiter les coûts de réparation. Les mesures de l'invention sont d'autant plus intéressantes qu'elles permettent de limiter l'impact des chocs à faible vitesse sur la face avant des véhicules, de manière simple et peu coûteuse.

D'autres caractéristiques et avantages de la présente invention seront mieux compris à l'aide de la description et des dessins parmi lesquels :
- La figure 1 illustre une platine support de pare-chocs sur la partie avant d'un véhicule automobile selon un premier mode de réalisation de l'invention;
- La figure 2 montre une vue en coupe de la portion de la face avant du véhicule représentée sur la figure 1.
- La figure 3 est une vue en perspective de la platine support du pare-chocs de la figure 1 :
- La figure 4 est une vue schématique du profil d'une partie avant d'un véhicule automobile selon un deuxième mode de réalisation qui ne correspond pas à l'invention.

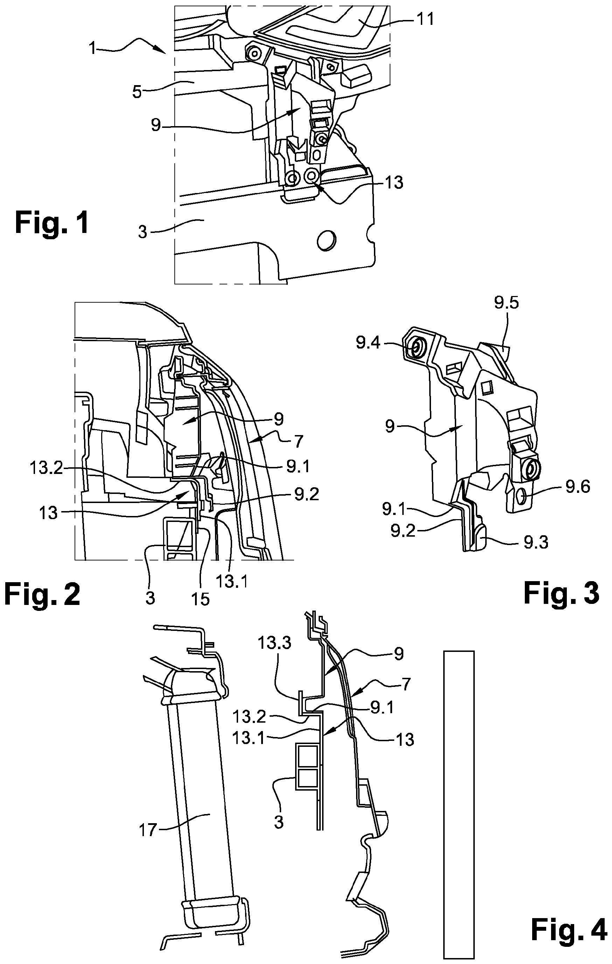

La figure 1 est une vue en perspective de la partie avant 1, côté gauche, d'un véhicule automobile selon un premier mode de réalisation de l'invention. Cette partie avant 1 est formée d'une traverse de pare-chocs 3, d'une traverse supérieure de façade avant 5 et d'un pare-chocs, non représenté, destiné à s'étendre devant ces deux traverses. Cette partie avant 1 comprend également au moins une platine support du pare-chocs 9, en l'occurrence sur la figure 1 une seule platine support du pare-chocs 9 est représentée. Cette platine de support du pare-chocs 9 est en fait agencée latéralement par rapport à un axe longitudinal du véhicule, à une extrémité gauche de la traverse supérieure de la façade avant 5, qui est adjacente à un projecteur 11 gauche, et s'étend par ailleurs verticalement vers la traverse de pare-chocs 3. Cette platine support du pare-chocs 9 qui est avantageusement fixée à la fois sur l'extrémité de la traverse supérieure de la façade avant 5 et sur le projecteur 11 correspondant, a en fait pour fonction de coopérer avec la traverse de pare-chocs 3 de façon à prendre appui sur celle-ci lorsque le pare-chocs 7 subit un choc frontal à faible vitesse. La coopération entre la platine support du pare-chocs 9 et la traverse de pare-chocs 3 peut s'effectuer notamment *via* une équerre 13 qui est fixée sur cette traverse 3.

La figure 2 est une vue en coupe longitudinale de la partie avant 1 du véhicule de la figure 1. Sur cette figure, il est possible d'observer que l'équerre 13 de fixation comprend en fait deux portions 13.1, 13.2. La première portion 13.1 est verticale et est montée soit directement par vissage sur la traverse de pare-chocs 3 ou à l'aide d'une patte métallique 15 qui peut être soudée à la traverse de pare-chocs 3. La deuxième portion 13.2 de l'équerre 13 est quant à elle adjacente à la première portion 13.1 et s'étend horizontalement au-dessus de la traverse du pare-chocs 3. La coopération de la platine support du pare-chocs 9 avec la traverse de pare-chocs 3 se fait d'une part grâce une face inférieure horizontale 9.1 de la platine 9 qui est simplement posée directement en vis-à-vis sur la deuxième portion 13.2 de l'équerre 13 mais d'autre part également grâce à une patte inférieure 9.2 de cette même platine 9 qui s'étend vers le bas devant la première portion 13.1 de l'équerre 13, avantageusement à une distance de celle-ci qui peut être comprise entre 6 à 10mm, préférentiellement de l'ordre de 8mm. Ainsi lors d'un choc urbain, à 15 km/h contre un obstacle rigide, la platine support du pare-chocs 9, tout en glissant sur la deuxième portion 13.2 horizontale de l'équerre 13, va pouvoir être retenue sur la traverse du pare-chocs 3 grâce à la patte inférieure 9.2 qui vient en butée contre la première portion verticale 13.1 de l'équerre 13. Cette coopération entre la platine support de pare-chocs 9 et l'équerre 13 fixée sur la traverse du pare-chocs 3 permet donc d'empêcher le déplacement vers l'arrière de la platine 9 et ainsi l'endommagement du groupe moto-ventilateur du système de refroidissement.

La figure 3 est une vue en perspective de la platine support de pare-chocs 9 de la figure 1. Cette platine 9 est généralement réalisée en matière plastique ou en matière plastique renforcée de fibres. Sur cette figure 3 on peut distinctement visualiser d'une part la face inférieure horizontale 9.1 de la platine support de pare-chocs 9 qui coopère avec la deuxième portion horizontale 13.2 de l'équerre 13 en glissant sur celle-ci (figure 2), mais également d'autre part la patte inférieure 9.2 de cette même platine 9 qui vient buter en appui verticale contre la première portion 13.1 de l'équerre (figure 2). Sur cette figure 3, la patte inférieure 9.2 de la platine support du pare-chocs présente en l'occurrence un bossage 9.3 qui est formé pour épouser la tête de la ou d'au moins une vis de fixation de l'équerre 13 sur la traverse de pare-chocs 3. Sur cette figure 3, les zones de fixation 9.4, 9.5 de la platine support de pare-chocs 9 sur la traverse supérieure de la façade avant 5 et sur le projecteur 11 sont également visibles, ainsi qu'une zone de fixation 9.6 de la face avant 5 de cette même platine 9 sur le pare-chocs 7 lui-même. Les moyens de fixations utilisés étant connus de l'homme du métier et ils ne sont donc pas détaillés.

La figure 4 est une vue schématique d'une coupe transversale d'une partie avant 1 d'un véhicule automobile suivant un deuxième mode de réalisation ne correspondant pas à l'invention. Dans ce mode de réalisation, la platine support de pare-chocs 9 comprend également une face inférieure horizontale 9.1 posée sur la deuxième portion 13.2 de l'équerre 13 mais ne comporte pas nécessairement de patte inférieure 9.2 s'étendant vers le bas devant la première portion 13.1 de l'équerre 13. Le système de retenue de cette platine support de pare-chocs 9 lors d'un choc urbain est en fait ici réalisé par l'équerre 13 fixée sur la traverse de pare-chocs 3. Cette équerre 13 comprend en plus de la première portion 13.1 verticale et de la deuxième portion horizontale 13.2, une troisième portion 13.3. Comme cette portion 13.3 supplémentaire s'étend verticalement vers le haut depuis la deuxième portion 13.2 de l'équerre 13 et derrière la platine support du pare-chocs 9, elle permet donc d'éviter que la platine 9 vienne heurter le système de refroidissement 17 suite à un choc urbain à faible vitesse.

De manière générale, cette invention qui permet de limiter les dommages occasionnés par les chocs urbains sur les pare-chocs avant des véhicules automobile est une invention simple à réaliser et peu coûteuse à mettre en œuvre. Elle ne nécessite en effet seulement de modifier la géométrie d'une platine support du pare-chocs déjà existante, pour assurer la fonction de retenue de ce support de pare-chocs, et aucune utilisation de pièce complémentaire demandant un montage supplémentaire, ce qui permet par conséquent un gain de temps et de revient pour la fabrication.

Il est évidemment entendu que ce qui vient d'être décrit pour la partie avant gauche d'un véhicule automobile est aussi valable pour la partie avant droite de ce même véhicule.

## Revendications

1. Partie avant (1) d'un véhicule automobile, comprenant :
- une traverse de pare-chocs (3) ;
- une traverse supérieure de façade avant (5) ;
- un pare-chocs (7) s'étendant devant la traverse de pare-chocs (3) et la traverse supérieure de façade avant (5) ;
- au moins une platine support du pare-chocs (9), fixée à la traverse supérieure de façade avant (5) ;
la ou chacune des platines supports du pare-chocs (9) coopère avec la traverse de pare-chocs (3) de manière à prendre appui sur ladite traverse (9) en cas de choc frontal sur ledit pare-chocs (7),.**caractérisée en ce que** la ou chacune des platines supports du pare-chocs (9) coopère avec la traverse de pare-chocs (3) via une équerre (13) fixée à ladite traverse (3), l'équerre (13) ou chacune des équerres (13) comprenant une première portion verticale (13.1) montée sur la traverse de pare-chocs (3) et une deuxième portion adjacente (13.2) à la première portion (13.1) et s'étendant horizontalement au-dessus de la dite traverse (3), la ou chacune des platines supports du pare-chocs (9) comprenant une face inférieure horizontale (9.1) directement en vis-à-vis de la deuxième portion (13.2) de l'équerre (13) correspondante et une patte inférieure (9.2) s'étendant vers le bas devant la première portion (13.1) de l'équerre (13) correspondante.

2. Partie avant (1) de véhicule selon la revendication 1, **caractérisée en ce que** chacune des platines supports du pare-chocs (9) est disposée latéralement par rapport à un axe longitudinal du véhicule, à une extrémité de la traverse supérieure de façade avant (5).

3. Partie avant (1) de véhicule selon la revendication 2, **caractérisée en ce que** chacune des platines supports du pare-chocs (9) est fixée à l'extrémité correspondante de la traverse supérieure de façade avant (5) et à un projecteur adjacent (11) à ladite extrémité.

4. Partie avant (1) de véhicule selon l'une des revendications 1 à 3, **caractérisée en ce que** la ou chacune des platines supports du pare-chocs (9) s'étend verticalement vers la traverse de pare-chocs (3).

5. Partie avant (1) de véhicule selon l'une des revendications 1 à 4, **caractérisée en ce que** la ou chacune des équerres (13) comprend une troisième portion (13.3) s'étendant verticalement vers le haut depuis la deuxième portion (13.2) et derrière la platine support du pare-chocs (9) correspondante.

6. Partie avant (1) de véhicule selon l'une des revendications 1 à 5, **caractérisée en ce que** la première portion (13.1) de la ou de chacune des équerres (13) est vissée directement sur la traverse de pare-chocs (3) ou sur une patte soudée (15) à la dite traverse (3).

7. Partie avant (1) de véhicule selon les revendications 1 et 6, **caractérisée en ce que** la patte inférieure (9.2) de la ou de chacune des platines supports du pare-chocs (9) est formée pour épouser la tête de la ou d'au moins une des vis de fixation de l'équerre (13) correspondante sur la traverse de pare-chocs (3).

## Patentansprüche

1. Vorderteil (1) eines Kraftfahrzeugs, bestehend aus:
- einem Stoßfängerquerträger (3);
- einer oberen vorderen Fassadenschwelle (5);
- einem Stoßfänger (7), der sich vor dem Stoßfängerquerträger (3) und dem oberen Frontfassadenquerträger (5) erstreckt;
- mindestens eine Trägerplatte der Stoßstange (9), die an der oberen vorderen Fassadentraverse (5) befestigt ist;
Die oder jede der Stützplatten der Stoßstange (9) wirkt mit der Stoßstange (3) zusammen, um sich bei einem Frontalaufprall auf der Stoßstange (7) an der Stoßstange (9) abzustützen. **Dadurch gekennzeichnet, dass** die oder jede der Stützplatten der Stoßstange (9) mit der Stoßstange (3) über einen an der Traverse (3) befestigten Winkel (13) zusammenwirkt. Der Winkel (13) oder jeder der Winkel (13) umfasst einen ersten vertikalen Abschnitt (13.1), der an dem Stoßfängerquerträger (3) befestigt ist, und einen zweiten benachbarten Abschnitt (13.2), der an den ersten Abschnitt (13.1) angrenzt und sich horizontal über den Querträger (3) erstreckt, wobei die oder jede der Tragplatten eine Fläche aufweist Waagerechte untere Stütze (9.1) unmittelbar gegenüber dem zweiten Teil (13.2) des entsprechenden Winkels (13) und eine untere Lasche (9.2), die sich nach unten vor dem ersten Teil (13.1) des entsprechenden Winkels (13) erstreckt.

2. Wie sieht die Lage aus? Fahrzeugvorderteil (1) nach Anspruch 1, **dadurch gekennzeichnet, dass** jede der Stützplatten der Stoßstange (9) seitlich einer Fahrzeuglängsachse an einem Ende des vorderen oberen Fassadenquerträgers (5) angeordnet ist.

3. Die Kommission wird Folgendes vorschlagen: Vorderteil (1) eines Fahrzeugs nach Anspruch 2, **dadurch gekennzeichnet, dass** jede der Stützflächen des Stoßfängers (9) an dem entsprechenden Ende des oberen vorderen Fassadenquerträgers (5) und an einem benachbarten Scheinwerfer (11) an dem Ende befestigt ist.

4. Die Kommission wird Folgendes vorschlagen: Fahrzeugvorderteil (1) nach einem der Ansprüche 1 bis 3, **dadurch gekennzeichnet, dass** sich die oder jede der Tragflächen des Stoßfängers (9) vertikal zum Stoßfängerquerträger (3) erstreckt.

5. Die Kommission wird Folgendes vorschlagen: Vorderteil (1) eines Fahrzeugs nach einem der Ansprüche 1 bis 4, **dadurch gekennzeichnet, dass** der oder jeder der Winkel (13) einen dritten Abschnitt (13.3) umfasst, der sich vertikal nach oben von dem zweiten Abschnitt (13.2) und hinter der entsprechenden Stoßfängerträgerplatte (9) erstreckt.

6. Die Kommission wird daher um Beantwortung folgender Fragen ersucht: Vorderteil (1) eines Fahrzeugs nach einem der Ansprüche 1 bis 5, **dadurch gekennzeichnet, dass** der erste Abschnitt (13.1) des oder jedes der Winkel (13) direkt auf den Stoßfängerquerträger (3) oder auf eine an den Querträger (3) angeschweißte Lasche (15) aufgeschraubt ist.

7. Die Kommission wird die Kommission um Beantwortung folgender Fragen ersuchen:
Fahrzeugvorderteil (1) nach den Ansprüchen 1 und 6, **dadurch gekennzeichnet, dass** die untere Lasche (9.2) der oder jeder der Stützplatten des Stoßfängers (9) so ausgebildet ist, dass sie mit dem Kopf der entsprechenden Befestigungsschraube oder Befestigungsschraube des Winkels (13) an der Stoßfängertraverse (3) übereinstimmt.

## Claims

1. Part before (1) of a motor vehicle, including:
- a bumper cross (3);
- a front front front top cross (5);
- a bumper (7) extending in front of the bumper cross (3) and the upper front front cross (5);
- at least one bumper support plate (9), attached to the upper front front front cross (5);
the bumper support plate(s) (9) shall cooperate with the bumper cross (3) in such a way as to support the bumper cross (9) in the event of a head impact on the bumper (7), **characterized by** the bumper support plate(s) (9) cooperating with the bumper cross (3) through a bracket (13) attached to the bumper cross (3), the bracket (13) or each of the brackets (13) comprising a first vertical portion (13.1) mounted on the bumper cross (3) and a second adjacent portion (13.2) to the first portion (13.1) and extending horizontally over the said cross (3), the bumper bracket(s)(9) containing one or more bumper supports horizontal lower face (9.1) directly opposite the second portion (13.2) of the corresponding bracket (13) and a lower leg (9.2) extending downward before the first portion (13.1) of the corresponding bracket (13).

2. Front part (1) of vehicle according to Claim 1, characterized that each of the bumper support plates (9) is positioned laterally in relation to a longitudinal axis of the vehicle at one end of the upper front crossbow (5).

3. Front part (1) of vehicle according to Claim 2, characterized that each of the bumper support plates (9) is attached to the corresponding end of the upper front front cross (5) and to an adjacent headlamp (11) at the said end.

4. Front (1) part of a vehicle according to one of the claims 1 to 3, characterized as the bumper deck(s) (9) extends vertically to the bumper cross (3).

5. Front (1) part of a vehicle according to one of the claims 1 to 4, **characterized by** that the bracket(s) (13) includes a third portion (13.3) extending vertically upward from the second portion (13.2) and behind the supporting plate of the corresponding bumper (9).

6. Front (1) part of a vehicle in accordance with one of the claims 1 to 5, **characterized by** the fact that the first portion (13.1) of the bracket(s) (13) is screwed directly on the bumper cross (3) or on a welded leg (15) at the said bracket (3).

7. Front part (1) of vehicle according to claims 1 and 6, characterized as the lower leg (9.2) of the bumper plate(s) (9) is formed to fit the head of the bumper or at least one of the corresponding bracket (13) fastening screws on the bumper rail (3).
